# EUROPEAN PATENT SPECIFICATION

(11) **EP 2 481 372 B1**
(45) Date of publication and mention of the grant of the patent: **08.01.2014**
(21) Application number: 11460004.2
(22) Date of filing: 27.01.2011
(51) Int. Cl.: A61C 8/00, A61C 1/08

(54) **A retention system to fix a complete denture in a mandible**
Rückhaltesystem zur Fixierung einer Vollprothese im Unterkiefer
Système de rétention pour fixer un appareil dentaire complet sur une mâchoire

(43) Date of publication of application: 01.08.2012
(73) Proprietor: Fundacja Uniwersytetu Medycznego, 60-275 Poznan (PL); Sliwowski, Krzysztof Tomasz, 40699 Erkrath (DE)
(72) Inventor: Sliwowski, Krzysztof Tomasz, 40699 Erkrath (DE); Zagalak, Rafal, 85-309 Bydgoszcz (PL)
(74) Representative: Kaminski, Zbigniew

(56) References cited:
- EP-A1- 2 106 768
- US-A- 5 564 921
- US-A- 6 048 203
- US-A- 6 116 070

## Description

### FIELD AND BACKGROUND OF THE INVENTION

The present invention relates to an improved retention system to fix a complete denture in a mandible. A retention system, to which the improvement according to the present invention relates, has been disclosed in European patent application No. EP 2106768 A1 and defined by the preamble of the independent claim.

European patent application no. EP 2106768 A1 teaches a retention system to fix a complete denture in a mandible that comprises the following components: implants, connectors with screws, a bar having a form of two sleeves interconnected by means of a span, a bar casing with a cavity having a negative shape of the bar cross-section perpendicular to an axis of its holes, and a set of drill guides, which hole diameters increase gradually.

The subject matter of patent application No. EP 2106768 A1 is characterized in that the retention system is additionally provided with a bar casing template, which shape and size correspond to the bar casing, while the drill guides have a special construction consisting of two drill guide sleeves interconnected by a drill guide span. An outer diameter of the drill guide sleeves correspond to a diameter of holes in the bar casing and of holes in the bar casing template, whereas a distance between axes of the drill guide sleeves is exactly equal to a distance between axes of holes in the bar sleeves.

Patent application No. EP 2106768 A1 also comprehensively describes the prior art in the field of implants in a mandible.

A clinical research of applications of the above-mentioned retention system in a dental practice revealed, that stresses built up due to physiological and technical difficulties in parallel and equidistant installation of implants in a mandible, as a result of an impact of sleeves, rigidly mounted in a bar, on implants in the mandible.

Prior art also discloses other prosthetic systems and methods. US 6116070 A document teaches superplastically-formed components of a prosthetic system, and a method and equipment for fabricating such components. The retention system utilizes a bar with abutments on both sides and two cylinders (connectors) which connect the bar to two implants by means of screws. Such system is well known. Matrices are bonded into abutments of the bar. With these matrices cooperate patrices that are bonded to underside of a superplastically-formed denture base. The denture base is in turn bonded to an acrylic resin denture having a plurality of artificial teeth mounted thereon.

US 5564921 A document discloses a method of forming an abutment post for prosthodontic restorations. The system, in which that abutment post is used, comprises an implant in a bone and an universal adapter, a stem of which fits inside the implant and is connected thereto by an anchor screw. To extend the restoration of the implant into the oral cavity a tapered gingival collar of varying length is used. The collar has internal openings to receive from the bottom an opposite end of the adapter and from the top the abutment post. The abutment post is fixed to the implant by means of a fixation screw passing through the abutment post and the collar. The abutment post, which is preferably made from a thermoplastic material, can be angulated to compensate for an otherwise angulated implant that is not parallel to other teeth or implants. In another embodiment, the post can be offset to change the restoration of the implant.

US 6048203 A document relates to a system and method for filling a dental occlusion with a metal-free prosthesis. First at least one implant fixture is implanted, next a metal-free abutment is added to the implant fixture, then an impression is taken over any abutment and the metal-free prosthesis is fabricated from an impression model, and finally the prosthesis is anchored to the abutments. The abutments are attached to the implants by means of mounting screws. The prosthesis is joined to the abutments by means of a light curable polymer resin coated on the prosthesis and/or abutment. Supplementary to the polymer resin, an attachment screw can be used to create a mechanical connection between the prosthesis and abutment.

### SUMMARY OF THE INVENTION

An object of this invention, being an improvement of the solution of patent application No. EP 2106768 A1, is to provide an improved retention system to fix a complete denture in a mandible, by providing such construction of a connection between a bar and connectors, which would enable setting up the bar and the connectors that eliminates stress formation, and in that the connector has at its lower part, beneath its support flange, an eccentric annular projection adapted for mounting the connector inside a hole of the implant, dimensions and shape of which correspond to a periphery of the hole of the implant.

According to the invention, there is provided an improved retention system to fix a complete denture, in which an axis of a hole of a connector is eccentrically offset with respect to an axis of an outer surface of the connector, enabling, by rotation of the connector, a precise setting of a bar in relation to an implant, and thus elimination of stress formation.

Preferably, the connector of the retention system is a sleeve, the hole of which has the axis being eccentrically offset with respect to the axis of the outer surface of the sleeve, wherein the outer surface of the sleeve is a cylindrical surface having a negative shape of a hole in the sleeve of the bar.

Advantageously, the support flange on outer surface of the connector of the retention system according to the invention is adapted for resting on a bottom surface of the sleeve of the bar.

Further, the value of the eccentricity between the axis of the hole of the connector and the axis of the outer surface of the connector ranges from 0.1 to 0.5 mm.

Preferably, the connector according to the invention has, on its top surface, a groove for a screwdriver.

Advantageously, the connector according to the invention has a clamping screw adapted for connecting the implant with the bar by means of the connector, the clamping screw having a shank, an external thread at the lower part of the shank, and a flanged head with an opening for a key at the upper part of the shank, wherein the external thread of the clamping screw is adapted to mate with an internal thread in the hole of the implant.

A clinical research on the retention system according to the invention revealed, that due to possibility of an easy setting of the bar with respect to the implants in the mandible, any stresses, which would cause a pressure of the implants exerted on bones of the mandible and on gums surrounding the bones, have been eliminated.

Moreover, using the camping screws in the retention system according to the invention, which connect the connector with the bar, eliminates currently used, very inconvenient gluing of the bar with the connector.

### BRIEF DECRIPTION OF THE DRAWINGS

A retention system to fix a complete denture in a mandible according to the invention is herein described, by way of example only, with reference to the accompanying drawings, wherein:
Fig. 1 is an exploded view of the retention system comprising a bar, a bar casing, connectors, clamping screws and implants;
Fig. 2 is a side perspective view of the connector of the retention system;
Fig. 3 is a cross-section view of the same connector taken along the plane passing through both eccentric axes;
Fig. 4 is a perspective view of the clamping screw; and
Fig. 5 is a perspective view with a partial cross-section of the assembled retention system of Fig. 1.

### DESCRIPTION OF THE PREFERRED EMBODIMENTS

European patent application No. EP 2106768 A1 relates to a retention system to fix a complete denture in a mandible, the retention system comprising two implants **8** in the form of screws driven into a mandible (after a prior X-ray examination), two connectors **9** mounted in holes of a sleeve **3A** of a bar **3**, and a bar casing **1** provided with a cavity that closely fits the shape and the size of the bar **3**, and with a bolt **10.** The implants **8** are provided with a threaded hole adapted to receive screws that mount the connectors **9.**

A clinical research revealed a possibility of stress formation in the mandible, as a result of an insufficient alignment of axes of the implants and holes in the bar, respectively, which should be aligned.

The present invention relates to an improved retention system as described in patent application No. EP 2106768 A1, with an objective to eliminate stress formation possibilities that affect a patient, and a resulting pressure, which may cause loss of integrity between an implant and a bone, and also to eliminate a risk of mechanical damages of components of the retention system.

The objective has been met by applying connectors and screws of a special construction, which enable a precise setting of holes of the bar sleeve and thus the bar with respect to axes of the implants mounted in the mandible, what eliminates any possibility of stress formation in the mandible.

The construction of the bar **3** of the retention system according to the invention is similar to that of EP 2106768 A1, and comprises a rectangular span **3B** having at its ends parallel sleeves **3A** whose axes are perpendicular to the span **3B** that links the sleeves **3A.** In its middle part the span **3B** has a hole **3C** being perpendicular to the span **3B,** which is adapted for retention of the pivot **10A,** whose body **10B** is installed in the bar casing **1.** In a vertical view the line passing through a front edge of the span **3B** is tangent to an outer surface of both sleeves **3A.**

The casing **1** of the bar **3** has a cavity constituting a socket adapted to accommodate the bar **3** at a predefined position, that enables keeping a proper position of a denture with respect to a prosthetics field of the mandible. A middle part **1B** of the bar casing **1** is rectangular, and has on its bottom surface a rectilinear notch of rectangular cross-section, which corresponds to the shape and size of the cross-section of the bar **3**. Both ends of the span have cylindrical ends **1A** with round axial pass-through holes. The spacing and inner diameter of the cylindrical ends **1A** of the casing **1** reflect the spacing and the outer diameter of the outer diameter of the sleeve **3A** of the bar **3**. A vertical wall of the casing **1** turned towards the tongue side forms an arch.

All the above-mentioned components constitute a retention system for fixing a complete denture in a mandible and are designed for any patient. All these elements are prefabricated and do not require any adjustment by a dental technician to individual characteristics of the patient's mandible.

Moreover, the retention system of EP 2106768 A1 also includes a bar casing template, an additional set of drill guides adapted to make holes for implants, as well as a set of sleeves and horizontal stabilizing pins, mounted in the sleeves.

The retention system of EP 2106768 A1 includes connectors **9** which form a prosthetic pillars adapted to interconnect the implants **8** with the sleeves **3A** of the bar **3**, wherein a connection between the connectors and the sleeves is performed by means of gluing, while the holes in the sleeves are plugged.

Due to possibilities of stress formation in a bone of a mandible, as a result of inaccurate drilling of holes for implants, the present invention uses connectors and clamping screws, which enable a precise setting of the bar with respect to the implants, and thus, eliminate the possibilities of stress formation.

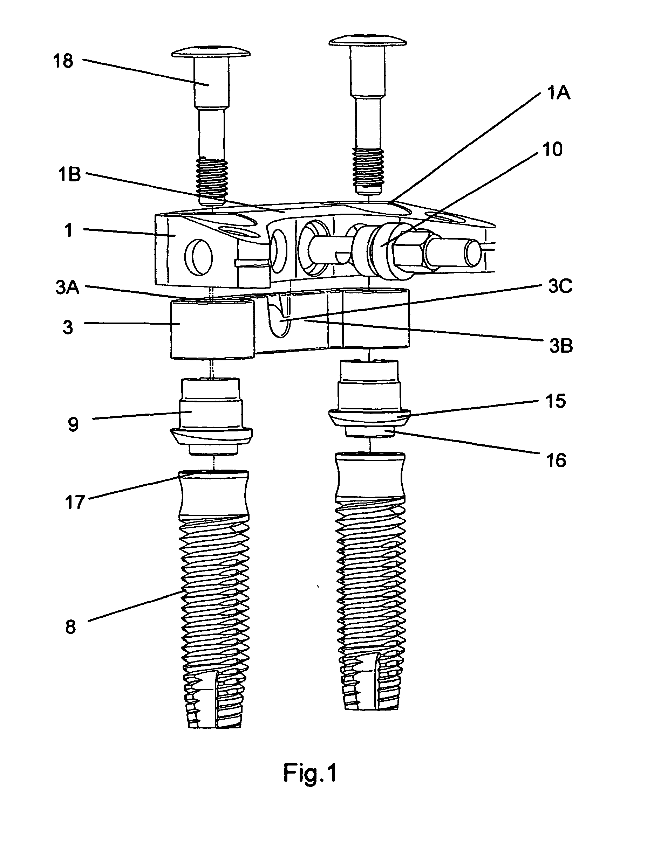

Fig. 1 shows an exploded view of a retention system according to the present invention. The retention system comprises a casing **1** with a known bolt **10** and a bar **3** mounted inside the casing **1**, all the components having the identical construction as corresponding components of EP 2106768 A1. Moreover, the system comprises implants 8 having in their upper parts holes **17** with inner threads and being mounted in a bone of a mandible, as well as connectors **9** and clamping screws **18**.

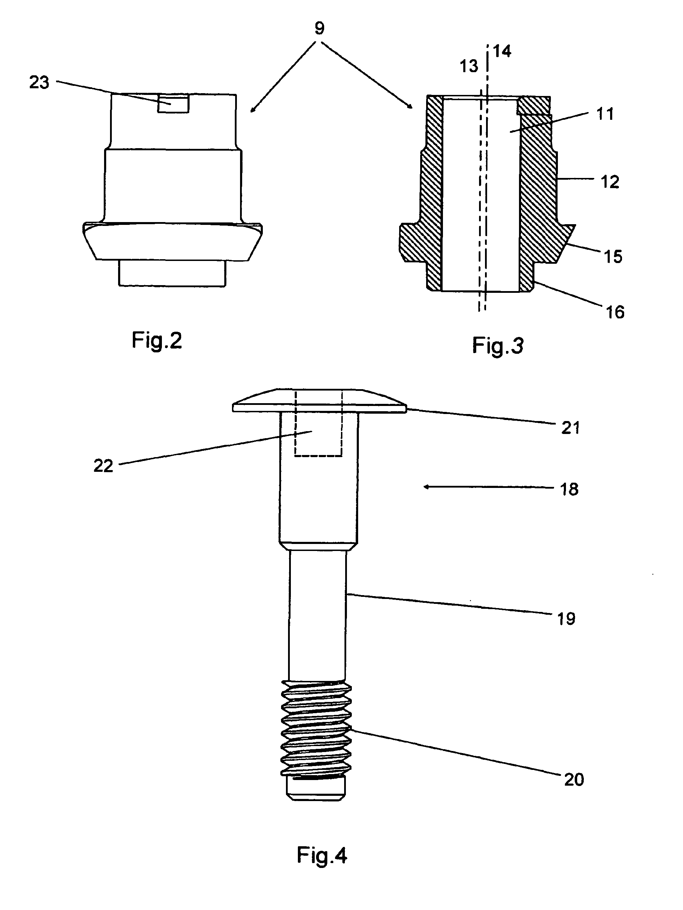

The connector **9** of the retention system, as shown in Figs 2 and 3, has a form of a thick-walled sleeve with an eccentric hole **11,** an axis **13** of which is offset with respect to an axis **14** of an outer surface **12** of the connector **9.** The value of the eccentricity ranges from 0.1 to 0.5 mm. The outer surface **12** of the connector **9** constitutes at its upper part a negative shape of a hole surface of the sleeve **3A** of the bar **3,** while at its lower part the outer surface **12** of the connector **9** has a flange **15,** a top surface of which forms a support surface for the bar **3.** Beneath a bottom surface of the flange **15** there is an eccentric annular projection **16** adapted for mounting the connector **9** inside the hole **17** of the implant **8**, wherein dimensions and shape of the projection **16** constitute a negative shape of a periphery of the hole **17** of the implant **8.** A top surface of the connector **9** has a groove **23** for a screwdriver.

Fig. 4 shows a clamping screw **18,** which consists of a shank **19** with an external thread **20** at its lower part, which is adapted to mate with an internal thread formed in the hole **17** of the implant **8,** and a flanged head **21** with an hexagonal opening **22** for a key at its top surface. A bottom surface of the flanged head **21** forms a support surface, which presses against a top surface of the sleeve **3A** of the bar **3.** Such construction of the clamping screw **18** constitutes a connecting member, which stabilizes all components of the retention system, that is the bar **3** with the implants **8,** as well as connectors **9** being clamped between the bar **3** and top surfaces of the implants **8.** Using the clamping screws **18** of such construction in the retention system according to the invention eliminates at the same time necessity of applying gluing techniques.

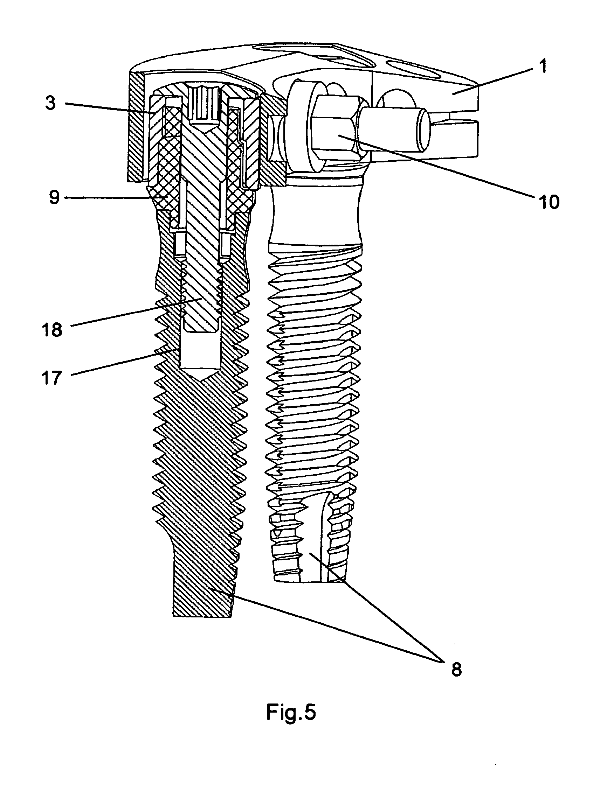

Fig. 5 shows the assembled retention system adapted for mounting a complete denture within it.

An assembling of the retention system according to the invention is as follows. First, two parallel holes are drilled in a bone of a mandible for mounting implants, preferably using the technique as described in EP 2106768 A1. Next, the implants **8** are screwed in the holes of the bone and the annular projections **16** of the connectors **9** are inserted in the holes **17** of the implants **8**. In the next step, the bar **3** is installed on the connectors **9.** By rotation of the connectors **9** with use of a screwdriver in the groove **23**, the position of the bar **3** is adjusted with respect to the implants **8** to eliminate any side forces acting on the implants **8**, and thus to eliminate any possibilities of stress formation. After the adjustable installation of the bar **3** on the connectors **9,** the clamping screws **18** are inserted into the holes of the sleeves **3A** of the bar **3** and screwed of their external threads **20** in the threaded holes **17** of the implants **8**. Then the clamping screws **18** are tighten to obtain a stable connection between the bar **3** and the implants **8**, with a moderate, bilateral tightening of the connectors **9.** And finally, a complete denture is mounted on the correctly installed bar **3**, preferably in the manner as described in EP 2106768 A1.

## Claims

1. A retention system to fix a complete denture in a mandible, comprising: implants (**8**), a bar (**3**) having a form of two sleeves (**3A**) interconnected by means of a span (**3B**), two connectors (**9**) mounted in holes of the sleeves (**3A**) of the bar (**3**) and adapted to interconnect, by means of screws, the implants (**8**) with the sleeves (**3A**) of the bar (**3**), a bar casing (**1**) with a cavity having a negative shape of the bar cross-section perpendicular to an axis of its holes, and a set of drill guides, which hole diameters increase gradually, the retention system comprising additionally a template of the bar casing (**1**), which shape and size correspond to the bar casing (**1**), wherein the drill guides, used for precise drilling parallel holes for an implant placement, consist of two drill guide sleeves, interconnected by a drill guide span, and an outer diameter of the drill guide sleeves corresponds to a diameter of holes (**1A**) in the bar casing (**1**) and of holes in the bar casing template, whereas a distance between axes of the drill guide sleeves is exactly equal to a distance between axes of holes in the sleeves (**3A**) of the bar (**3**), **characterized in that** an axis (**13**) of a hole (**11**) of the connector (**9**) is eccentrically offset with respect to an axis (14) of an outer surface (**12**) of the connector (**9**), enabling, by rotation of the connector (**9**), a precise setting of the bar (**3**) in relation to the implant (**8**), and thus elimination of stress formation, and **in that** the connector (9) has at its lower part, beneath its support flange (15), an eccentric annular projection (16) adapted for mounting the connector (9) inside a hole (17) of the implant (8), dimensions and shape of which correspond to a periphery of the hole (17) of the implant (8).

2. The retention system according to claim 1, **characterized in that** the connector (**9**) is a sleeve, the hole (**11**) of which has the axis (**13**) being eccentrically offset with respect to the axis (**14**) of the outer surface (**12**) of the sleeve, wherein the outer surface (**12**) of the sleeve is a cylindrical surface having a negative shape of the hole in the sleeve (**3A**) of the bar (**3**).

3. The retention system according to claim 2, **characterized in that** the support flange (**15**) on the outer surface (**12**) of the connector (**9**) is adapted for resting on a bottom surface of the sleeve (**3A**) of the bar (**3**).

4. The retention system according to claim 1, **characterized in that** the value of the eccentricity between the axis (**13**) of the hole (**11**) of the connector (**9**) and the axis (**14**) of the outer surface (**12**) of the connector (**9**) ranges from 0.1 to 0.5 mm.

5. The retention system according to claim 1, **characterized in that** the connector (**9**) has, on its top surface, a groove (**23**) for a screwdriver.

6. The retention system according to claim 1, **characterized in that** the connector (**9**) has a clamping screw (**18**), adapted for connecting the implant (**8**) with the bar (**3**) by means of the connector (**9**), the clamping screw (**18**) having a shank (**19**), an external thread (**20**) at the lower part of the shank (**10**), and a flanged head (**21**) with an opening (**22**) for a key at the upper part of the shank (**19**), wherein the external thread (**20**) of the clamping screw (**18**) is adapted to mate with an internal thread in the hole (**17**) of the implant (**8**).

## Patentansprüche

1. Retentionssystem zur Befestigung der Vollprothese im Unterkiefer, bestehend aus: Implantaten (**8**), Balken (**3**) in Form von zwei Hülsen (**3A**) verbunden über Joch (**3B**), zwei Verbindungsstücke (**9**) befestigt an Hülsenlöchern (**3A**) des Balkens (**3**), geeignet zur Schraubverbindung, Implantaten (**8**) mit Hülsen (**3A**) des Balkens (**3**), Balkengehäuse (**1**) mit Aussparung als negative Widerspiegelung des Balkenquerschnitts quer zu Balkenlöchern sowie ein Bohrerführungssystem mit sich stufenweise vergrößernden Durchmessern, wo das Retentionssystem zusätzlich mit einer Schablone für Gehäuse (**1**) des Balkens ausgerüstet ist, welche in Bezug auf die Form und Abmessungen dem Gehäuse (**1**) des Balkens entspricht und die Bohrerführungen zum genauen Bohren der parallelen Bohrungen in Implantatbetten aus zwei Hülsen bestehen, welche über ein Joch verbunden sind, wobei der Außendurchmesser dieser Bohrerführungshülsen dem Bohrungsdurchmesser (**1A**) des Gehäuses (**1**) des Balkens und der Bohrungen der Balkengehäuseschablone entspricht, wobei der Abstand zwischen den Achsen dieser Bohrerführungshülsen dem Abstand zwischen den Achsen der Bohrungen der Hülsen (**3A**) des Balkens (**3**) genau entspricht, **dadurch gekennzeichnet, dass** die Achse (**13**) der Bohrung (**11**) des Verbindungsstücks (**9**) exzentrisch versetzt ist zur Achse (**14**) der Oberfläche (**12**) dieses Verbindungsstücks (**9**) und somit durch Drehung die genaue Einstellung des Balkens (**3**) zum Implantat (**8**) ohne Spannungen ermöglicht, sowie dass das Verbindungsstück (**9**) in seinem unteren Bereich unterhalb des Bundes (**15**) über eine w Exzenter-Ringnase (**16**) zur Befestigung des Verbindungsstücks (**9**) in der Bohrung (**17**) des Implantats (**8**) verfügt und deren Abmessungen und Form der Kante der Bohrung (**17**) des Implantats (**8**) genau entsprechen.

2. Retentionssystem nach Anspruch 1, **dadurch gekennzeichnet, dass** sein Verbindungsstück (**9**) aus einer Hülse besteht, deren Bohrung (**11**) mit einer Achse (**13**) verfügt, die zur Achse (**14**) der Oberfläche (**12**) der Hülse versetzt ist, wobei die Oberfläche (**12**) zylinderförmig ist, die eine negative Widerspiegelung der Bohrung der Hülse (**3A**) des Balkens (**3**) darstellt.

3. Retentionssystem nach Anspruch 2, **dadurch gekennzeichnet, dass** der Bund (**15**) auf der Oberfläche (**12**) des Verbindungsstücks (**9**) die untere Seite der Hülse (**3A**) des Balkens (**3**) abstützen kann.

4. Retentionssystem nach Anspruch 1, **dadurch gekennzeichnet, dass** der Wert der Exzentrizität zwischen der Achse (**13**) der Bohrung (**11**) des Verbindungsstücks (**9**) und der Achse (**14**) der Oberfläche (**12**) dieses Verbindungsstücks (**9**) im Bereich von 0,1 bis 0,5 mm liegt.

5. Retentionssystem nach Anspruch 1, **dadurch gekennzeichnet, dass** sein Verbindungsstück (**9**) auf seiner Oberseite mit einer Rille (**23**) für Schraubendreher verfügt.

6. Retentionssystem nach Anspruch 1, **dadurch gekennzeichnet, dass** sein Verbindungsstück (**9**) mit einer Befestigungsschraube (**18**) ausgerüstet ist, die das Implantat (**8**) mit dem Balken (**3**) mittels des Verbindungsstücks (**9**) verbinden kann, wobei die Befestigungsschraube (**18**) aus Bolzen (**19**), Außengewinde (**20**) am unteren Teil des Bolzens (**19**) und des Flansches (21) mit Bohrung (**22**) für Schlüssel im oberen Bereich des Bolzens (**19**) besteht, wobei das Außengewinde (**20**) der Befestigungsschraube (**18**) zum Innengewinde der Bohrung (**17**) des Implantats (**8**) passt.

## Revendications

1. Système de rétention pour fixer le prothèse complète dans le mandibule, comprenant: implants (**8**), faisceau (**3**) en forme de deux douilles (**3A**) liées avec une arche (**3B**), deux joints (9) montés dans les ouvertures des douilles (**3A**) de faisceau (**3**) et adapté à la liaison, avec des vis, des implants (**8**) avec les douilles (**3A**) de faisceau (**3**), boîtier de faisceau (**1**) avec un encoche, étant un image négatif d'une section du faisceau, perpendiculaire à l'axe de ses ouvertures, tant que le système des guidages des forages des diamètres des ouvertures augmentant progressivement, ou le système de rétention est équipé en plus d'un modèle du boîtier (**1**) du faisceau, répondant en sa forme et dimensions au boîtier (**1**) du faisceau, par contre, les guidages des forages servant au forage plus précis des trous parallèles sur les lits des implants, se composent de deux douilles des guidages des forages liées avec une arche, dans laquelle une diamètre extérieure de ces douilles de guidages des forages répond à la diamètre des trous (**1A**) dans le boîtier (**1**) de faisceau et des trous dans le modèle du boîtier de faisceau, sachant que la distance entre les axes de ces douilles de guidages des forages est strictement égale la distance entre les axes des ouvertures dans les douilles (3A) de faisceau (3), **caractérisé par le fait que** l'axe (**13**) de l'ouverture (**11**) du joint (9) est déplacé d'une manière excentrique en rapport à l'axe (**14**) de la surface extérieure (**12**) de ce joint (**9**) permettant en résultat de sa rotation à un positionnement précis de faisceau (**3**) en rapport à l'implant (**8**) ce qui élimine une création des tensions, et **caractérisé par le fait que** le joint (**9**) est équipé dans sa partie inférieure, sous la bride (**15**) en saillie excentrique circulaire (**16**) adapté au montage du joint (**9**) dans l'ouverture (**17**) de l'implant (**8**) dont les dimensions et la forme répondent au bord de l'ouverture (**17**) de l'implant (**8**).

2. Système de rétention selon la revendication 1, **caractérisé par le fait que** son joint (9) est une douille dont l'ouverture (**11**) a un axe (**13**) déplacé d'une manière excentrique en rapport à l'axe (**14**) de la surface extérieure (**12**) de la douille, sachant que cette surface extérieure (**12**) constitue une surface cylindrique étant un image négatif de l'ouverture de la douille (**3A**) de faisceau (**3**).

3. Système de rétention selon la revendication 2, **caractérisé par le fait que** la bride d'assise (**15**) sur la surface extérieure (**12**) du joint (9) est adapté à s'appuyer à la surface inférieure de la douille (3A) de faisceau (**3**).

4. Système de rétention selon la revendication 1, **caractérisé par le fait que** valeur excentrique entre l'axe (**13**) de l'ouverture (**11**) du joint (**9**) et de l'axe (**14**) de la surface extérieure (**12**) de ce joint (**9**) est conclue dans les limites de 0,1 à 0,5 mm.

5. Système de rétention selon la revendication 1, **caractérisé par le fait que** son joint (**9**) est équipé, dans sa surface supérieure, en rainure (23) pour le tournevis.

6. Système de rétention selon la revendication 1, **caractérisé par le fait que** son joint (**9**) est équipé en vis de fixation (**18**) adaptée à la liaison de l'implant (**8**) avec le faisceau (**3**) avec un joint (**9**) sachant que la vis de fixation (**18**) est composé d'un tige (**19**) d'un filetage (**20**) dans une partie inférieure du tige (**19**) et d'une bride (**21**) avec l'ouverture (**22**) à la clé, dans une partie supérieure du tige (**19**), sachant que le filetage extérieur (**20**) de la vis de fixation (**18**) est adapté au fonctionnement avec le filetage intérieur dans l'ouverture (**17**) de l'implant (**8**).
